# EUROPEAN PATENT SPECIFICATION

(11) **EP 4 131 204 B1**
(45) Date of publication and mention of the grant of the patent: **24.09.2025**
(21) Application number: 20933397.0
(22) Date of filing: 29.04.2020
(51) Int. Cl.: G08G 1/01, B60W 30/18, B60W 40/09

(54) **VEHICLE LANE-CHANGING BEHAVIOR RECOGNITION METHOD CORRESPONDING APPARATUS AND STORAGE MEDIUM**
VERFAHREN ZUR ERKENNUNG VON SPURWECHSELVERHALTEN EINES FAHRZEUGS, ENTSPRECHENDE VORRICHTUNG UND KORRESPONDIERENDES SPEICHERMEDIUM
MÉTHODE DE RECONNAISSANCE DU COMPORTEMENT DE CHANGEMENT DE VOIE D'UN VÉHICULE, APPAREIL CORRESPONDANT ET SUPPORT DE STOCKAGE

(43) Date of publication of application: 08.02.2023
(73) Proprietor: Shenzhen Yinwang Intelligent Technologies Co., Ltd., Shenzhen, Guangdong 518129 (CN)
(72) Inventor: NIE, Yuliang, Shenzhen, Guangdong 518129 (CN); WANG, Bingxue, Shenzhen, Guangdong 518129 (CN)
(74) Representative: MERH-IP Matias Erny Reichl Hoffmann Patentanwälte PartG mbB
(86) International application number: PCT/CN2020/087742
(87) International publication number: WO 2021/217485

(56) References cited:
- CN-A- 104 494 600
- CN-A- 105 374 212
- CN-A- 107 330 356
- CN-A- 109 002 797
- DE-A1- 102010 025 977
- JP-A- 2007 237 822
- US-A1- 2010 023 181

## Description

### TECHNICAL FIELD

The present invention relates to the field of automated driving technologies, and in particular to a method, an apparatus and a corresponding storage medium for recognizing a lane-changing behavior of a vehicle.

### BACKGROUND

An advanced driving assistance system (advanced driving assistance system, ADAS) is a system that uses various sensors installed in a vehicle to sense a surrounding environment in a traveling process of the vehicle, and performs calculation and analysis to recognize and predict a possible danger. The ADAS can increase safety of a vehicle, and therefore, the ADAS is usually installed in a vehicle that supports automated driving.

In an application process of the ADAS, the ADAS usually needs to recognize a lane-changing behavior of a vehicle. Currently, when the ADAS recognizes a lane-changing behavior of a vehicle, a camera usually needs to be installed in the vehicle, where the camera is configured to photograph a road image. After obtaining the road image photographed by the camera, the ADAS performs image analysis on the road image to determine location parameters (for example, a heading angle, lateral displacement, and a lateral speed) of the vehicle and a lane marking, and then determines, based on the location parameters, whether the vehicle has a lane-changing behavior. US2010/023181A1 generally discloses an adaptive vehicle control system that classifies a driver's driving style based on vehicle passing maneuvers. A process determines whether the vehicle has started a lane change from a first lane to a second lane as a first phase of the passing maneuver. If so, the process determines whether the lane change to the second lane has been completed as a second phase of the passing maneuver. If the lane change to the second lane has been completed, the process determines whether there has been a lane change back to the first lane to complete the passing maneuver as a third phase of the passing maneuver. Further, the process determines whether a time threshold has been exceeded after the passing maneuver is in a second phase, but no lane change back to the first lane has occurred.
DE102010025977A1 generally discloses a method involves defining of driving maneuver as a sequence of base elements, where each base element is defined by a fuzzy rule under utilization of a linguistic concept. State variables of a motor vehicle are measured by sensors of the motor vehicle. The driving maneuver of a motor vehicle is computed by Bayes-filter.

When a lane-changing behavior of a vehicle is recognized by using the conventional technology, a camera needs to be additionally configured in the vehicle, and a requirement for vehicle configuration is relatively high. In addition, in the solution in the conventional technology, accuracy of image analysis performed on a road image is relatively susceptible to an external environment, which reduces accuracy of recognizing a lane-changing behavior.

### SUMMARY

The invention is defined by the independent claims. Additional features of embodiments of the invention are presented in the dependent claims. When a lane-changing behavior of a vehicle is recognized by using the conventional technology, a camera needs to be additionally configured in the vehicle, which has a relatively high requirement for the vehicle, and is susceptible to an external environment, causing low accuracy of recognizing a lane-changing behavior. The present invention addresses this problem.

This invention provides a method for recognizing a lane-changing behavior of a vehicle, as defined by claim 1.

When this method is used to recognize a lane-changing behavior of a vehicle, a vehicle posture signal obtained by using a sensor rather than a road image photographed by a camera is relied on. Therefore, no camera needs to be additionally configured in the vehicle, which reduces a requirement for vehicle configuration.

In addition, in the solution provided by the invention, a lane-changing behavior of a vehicle is recognized by using a vehicle posture signal, and no image analysis needs to be performed on a road image. In addition, compared with the road image, the vehicle posture signal is not susceptible to an external environment, thereby improving accuracy of recognizing a lane-changing behavior. Correspondingly, robustness of recognizing a lane-changing behavior of a vehicle is improved.

In an optional design, the sensor includes at least one of a steering angle sensor, an inertial navigation sensor, and a wheel speed sensor.

The vehicle posture signal includes at least one of a steering angle, a steering speed, a yaw speed, lateral acceleration, or a vehicle speed.

The steering angle sensor, the inertial navigation sensor, and the wheel speed sensor are all sensors commonly used in a vehicle, and the several sensors are installed in the vehicle at delivery of the vehicle. In other words, in this embodiment, the sensor installed in the vehicle is used, and the vehicle does not need to be modified. Therefore, the solution provided in this embodiment is relatively easy to implement, has a relatively wide application range, and is relatively practical.

In an optional design, the inputting the at least two vehicle posture signals into a support vector machine model to recognize a first lane-changing behavior of the vehicle includes:
determining the first lane-changing behavior of the vehicle based on one output result of the support vector machine model; or
determining the first lane-changing behavior of the vehicle based on at least two output results of the support vector machine model.

In the lane change recognition manner in which one output result of the support vector machine model is determined as the first lane-changing behavior of the vehicle, a calculation amount is relatively small and efficiency of recognizing a lane-changing behavior of a vehicle is relatively high.

In addition, when the first lane-changing behavior of the vehicle is determined based on at least two output results of the support vector machine model, impact of an abnormal output result on recognition of a lane-changing behavior can be reduced, thereby improving accuracy of recognizing a lane-changing behavior.

In an optional design, the determining the first lane-changing behavior of the vehicle based on at least two output results of the support vector machine model includes:
when consecutive n output results of the support vector machine model each are a first target lane-changing behavior, determining that the first target lane-changing behavior is the first lane-changing behavior of the vehicle, where n is a positive integer greater than or equal to 2; or
when at least w output results in consecutive t output results of the support vector machine model each are a second target lane-changing behavior, determining that the second target lane-changing behavior is the first lane-changing behavior of the vehicle, where w is a positive integer greater than or equal to 2, and t is a positive integer greater than w.

In an optional design, the support vector machine model is determined by training vehicle posture signals obtained when the vehicle has lane-changing behaviors in different vehicle traveling environments and the lane-changing behaviors. The different vehicle traveling environments include at least one of different vehicle traveling roads, different traffic flow densities, different traveling styles, or different vehicle traveling speeds.

The support vector machine model is determined by training vehicle posture signals and lane-changing behaviors in different vehicle traveling environments. Therefore, the support vector machine model can recognize lane-changing behaviors in different vehicle traveling environments, and is relatively widely used.

The method according to the invention includes:
normalizing the at least two vehicle posture signals, and inputting at least two normalized vehicle posture signals into the support vector machine model.

The at least two vehicle posture signals are normalized, so that accuracy of processing the vehicle posture signal by the support vector machine model can be improved, thereby further improving accuracy of recognizing a lane-changing behavior.

In an optional design, the first lane-changing behavior of the vehicle includes at least one of the following: changing no lane, changing to a left lane, changing to a right lane, turning to the left, turning to the right, or turning around.

According to a second aspect, this invention provides an apparatus for recognizing a lane-changing behavior of a vehicle, as defined by claim 7.

In an optional design, the sensor includes at least one of a steering angle sensor, an inertial navigation sensor, or a wheel speed sensor.

The vehicle posture signal includes at least one of a steering angle, a steering speed, a yaw speed, lateral acceleration, or a vehicle speed.

In an optional design, the processing unit is specifically configured to determine the first lane-changing behavior of the vehicle based on one output result of the support vector machine model; or
the processing unit is specifically configured to determine the first lane-changing behavior of the vehicle based on at least two output results of the support vector machine model.

In an optional design, when consecutive n output results of the support vector machine model each are a first target lane-changing behavior, the processing unit is specifically configured to determine that the first target lane-changing behavior is the first lane-changing behavior of the vehicle, where n is a positive integer greater than or equal to 2; or
when at least w output results in consecutive t output results of the support vector machine model each are a second target lane-changing behavior, the processing unit is specifically configured to determine that the second target lane-changing behavior is the first lane-changing behavior of the vehicle, where w is a positive integer greater than or equal to 2, and t is a positive integer greater than w.

In an optional design, the support vector machine model is determined by training vehicle posture signals obtained when the vehicle has lane-changing behaviors in different vehicle traveling environments and the lane-changing behaviors. The different vehicle traveling environments include at least one of different vehicle traveling roads, different traffic flow densities, different traveling styles, or different vehicle traveling speeds.

According to the invention, the processing unit is further configured to normalize the at least two vehicle posture signals, and input at least two normalized vehicle posture signals into the support vector machine model.

In an optional design, the first lane-changing behavior of the vehicle includes at least one of the following: changing no lane, changing to a left lane, changing to a right lane, turning to the left, turning to the right, or turning around.

The invention is also directed to a readable storage medium. The readable storage medium is configured to store instructions, and when the instructions are executed, the method according to the first aspect is implemented.

In the method according to the invention, a vehicle posture signal of a vehicle is obtained based on a sensor installed in the vehicle, and then a lane-changing behavior of the vehicle is determined based on the vehicle posture signal and a support vector machine model configured to recognize a lane-changing behavior of a vehicle. The vehicle posture signal is obtained by using the sensor installed in the vehicle, and therefore, no camera needs to be additionally installed in the vehicle, which reduces a requirement for vehicle configuration.

According to the invention, a lane-changing behavior of a vehicle is recognized by using a vehicle posture signal, and no image analysis needs to be performed on a road image. Moreover, compared with the road image, the vehicle posture signal is not susceptible to an external environment. Correspondingly, a recognition result in this invention is not susceptible to the external environment. Therefore, compared with the conventional technology, accuracy of recognizing a lane-changing behavior can be improved in the solution provided in the invention.

Further, in the conventional technology, in each process of recognizing a lane-changing behavior, image analysis needs to be performed on the road image, and the image analysis usually requires a large amount of calculation. As a result, a calculation amount is relatively large in each time of recognizing a lane-changing behavior. However, in the embodiments of this invention, the support vector machine model may be pre-obtained by training a vehicle posture signal. In each subsequent process of recognizing a lane-changing behavior, the support vector machine model does not need to be repeatedly obtained, and a vehicle posture signal obtained by using a sensor can be input into the pre-obtained support vector machine model. Therefore, compared with the solution in the conventional technology, a calculation amount is relatively small in the solution in this embodiment.

Correspondingly, efficiency of recognizing a lane-changing behavior of a vehicle is improved, thereby ensuring real-time quality of recognizing a lane-changing behavior of a vehicle.

### BRIEF DESCRIPTION OF DRAWINGS

FIG. 1 is a schematic diagram of a working procedure of a method for recognizing a lane-changing behavior of a vehicle according to an embodiment of this invention;
FIG. 2(a) is a schematic diagram of a scenario of changing to a left lane on a straight road;
FIG. 2(b) is a schematic diagram of a scenario of changing to a left lane on a curved road;
FIG. 3(a) is a schematic diagram of a scenario of changing to a right lane on a straight road;
FIG. 3(b) is a schematic diagram of a scenario of changing to a right lane on a curved road;
FIG. 4(a) is a schematic diagram of a scenario of turning to the left;
FIG. 4(b) is a schematic diagram of a scenario of turning to the right;
FIG. 5 is a schematic diagram of a scenario of turning around;
FIG. 6 is a schematic diagram of determining a first lane-changing behavior of a vehicle in a method for recognizing a lane-changing behavior of a vehicle according to an embodiment of this invention;
FIG. 7 is another schematic diagram of determining a first lane-changing behavior of a vehicle in a method for recognizing a lane-changing behavior of a vehicle according to an embodiment of this invention;
FIG. 8 is a schematic diagram of a structure of an apparatus for recognizing a lane-changing behavior of a vehicle according to an embodiment of this invention;
FIG. 9 is a schematic diagram of a structure of a terminal apparatus according to an embodiment of this invention; and
FIG. 10 is a schematic diagram of a structure of another terminal apparatus according to an embodiment of this invention.

### DESCRIPTION OF EMBODIMENTS

In the specification, claims, and accompanying drawings of this invention, the terms "first", "second", "third", and the like are intended to distinguish different objects but do not limit a particular sequence.

In embodiments of this invention, the word "example", "for example", or the like is used to represent giving an example, an illustration, or a description. Any embodiment or design scheme described as an "example" or "for example" in embodiments of this invention should not be explained as being more preferred or having more advantages than another embodiment or design scheme. Exactly, use of the word "example", "for example", or the like is intended to present a related concept in a specific manner.

For clear and brief descriptions of the following embodiments, brief descriptions of a related technology are first provided.

With development of an advanced driving assistance system (advanced driving assistance system, ADAS), various intelligent control systems in the automated driving field need to properly determine a lane-changing behavior of a vehicle, and accurately recognize the lane-changing behavior of the vehicle in time, to control a traveling behavior of the vehicle.

If the lane-changing behavior of the vehicle is not correctly recognized, the ADAS usually cannot correctly control the traveling behavior of the vehicle, and a traffic accident is even caused in a serious case.

Currently, in a method for recognizing a lane-changing behavior usually used in the conventional technology, a camera needs to be configured in a vehicle. The camera is configured to photograph a road image, where the road image includes a lane marking on a road on which the vehicle travels, and the like. Image processing is performed on the road image to determine related location parameters of the vehicle, such as a heading angle, lateral displacement, and a lateral speed; and whether the vehicle has a lane-changing behavior is determined based on a change of the location parameter.

However, in this case, the camera needs to be additionally configured in the vehicle, which has a relatively high requirement for vehicle configuration.

Further, in the conventional technology, image processing is performed on the road image to determine whether the vehicle has a lane-changing behavior. However, accuracy of the road image is relatively susceptible to an external environment. When a lane marking is unclear or when the vehicle travels in the night, in a tunnel, or in another environment with relatively dark light, the road image photographed by the camera usually has relatively poor definition. Poor definition of the road image affects accuracy of image analysis performed on the road image, that is, accuracy of image analysis performed on the road image in the conventional technology is relatively susceptible to the external environment. Correspondingly, accuracy of recognizing a lane-changing behavior is reduced.

In addition, when a lane-changing behavior is recognized in the conventional technology, image processing needs to be performed on the road image to obtain a corresponding road parameter. However, a process of performing image processing on the road image usually requires a large amount of calculation, and a calculation amount is relatively large in each time of recognizing a lane-changing behavior. Further, a relatively large calculation amount slows down a speed of recognizing a lane-changing behavior, and consequently, the method for recognizing a lane-changing behavior in the conventional technology has relatively poor real-time quantity.

To resolve the foregoing technical problem, this invention provides a method and an apparatus for recognizing a lane-changing behavior of a vehicle.

The method for recognizing a lane-changing behavior of a vehicle provided in the embodiments of this invention is usually applied to an apparatus for recognizing a lane-changing behavior of a vehicle. The apparatus for recognizing a lane-changing behavior of a vehicle is usually installed in a vehicle configured to recognize a lane. The vehicle may support an automatic driving function, so that in an automatic driving process of the vehicle, a lane-changing behavior of the vehicle is recognized based on the solution provided in the embodiments of this invention.

In addition, a sensor that can obtain a vehicle posture signal is usually disposed in the vehicle, and the sensor usually includes at least one of a steering angle sensor, an inertial navigation sensor, or a wheel speed sensor. Different sensors may be configured to detect different vehicle posture signals of the vehicle. For example, the steering angle sensor may obtain vehicle posture signals such as a steering angle and a steering speed. The inertial navigation sensor may obtain vehicle posture signals such as a yaw speed and lateral acceleration. The wheel speed sensor may obtain a vehicle posture signal such as a vehicle speed.

The steering angle sensor, the inertial navigation sensor, or the wheel speed sensor is a sensor commonly used in a vehicle, and the several sensors are installed in the vehicle at delivery of the vehicle, so that the vehicle does not need to be modified, and instead, the sensor installed in the vehicle can be applied.

A processor is usually built in the apparatus for recognizing a lane-changing behavior of a vehicle. In a process of recognizing a lane-changing behavior of a vehicle, the processor may recognize the lane-changing behavior of the vehicle based on a vehicle posture signal detected by the sensor. When the apparatus for recognizing a lane-changing behavior of a vehicle is installed in a vehicle, the apparatus for recognizing a lane-changing behavior of a vehicle may be an in-vehicle processor of the vehicle.

In the embodiments of this invention, the sensor may be disposed in the apparatus for recognizing a lane-changing behavior of a vehicle, and is connected to the processor in the apparatus for recognizing a lane-changing behavior of a vehicle.

Alternatively, the apparatus for recognizing a lane-changing behavior of a vehicle may be a part of the sensor, that is, the apparatus for recognizing a lane-changing behavior of a vehicle is disposed in the sensor. In this case, after the sensor detects a vehicle posture signal, the apparatus for recognizing a lane-changing behavior of a vehicle recognizes a lane-changing behavior based on the vehicle posture signal.

In this design, when a lane-changing behavior of a vehicle is recognized by using two or more types of sensors, for example, when the steering angle sensor and the inertial navigation sensor are simultaneously applied, the apparatus for recognizing a lane-changing behavior of a vehicle may be disposed in one of the sensors, and another sensor is connected to the sensor, and transmits a detected vehicle posture signal to the sensor, so that the apparatus for recognizing a lane-changing behavior of a vehicle recognizes a lane-changing behavior based on the vehicle posture signal detected by each sensor.

Further, in the embodiments of this invention, the sensor may be a component independent of the apparatus for recognizing a lane-changing behavior of a vehicle. In this case, the apparatus for recognizing a lane-changing behavior of a vehicle and the sensor may be connected by using a controller area network (controller area network, CAN) bus of a vehicle. After detecting a vehicle posture signal, the sensor may transmit the vehicle posture signal to the processor by using the CAN bus, so that the processor recognizes, based on the received vehicle posture signal, a lane-changing behavior of a vehicle based on the solution provided in the embodiments of this invention.

The method for recognizing a lane-changing behavior of a vehicle provided in the embodiments of this invention is described below with reference to specific accompanying drawings and working procedures.

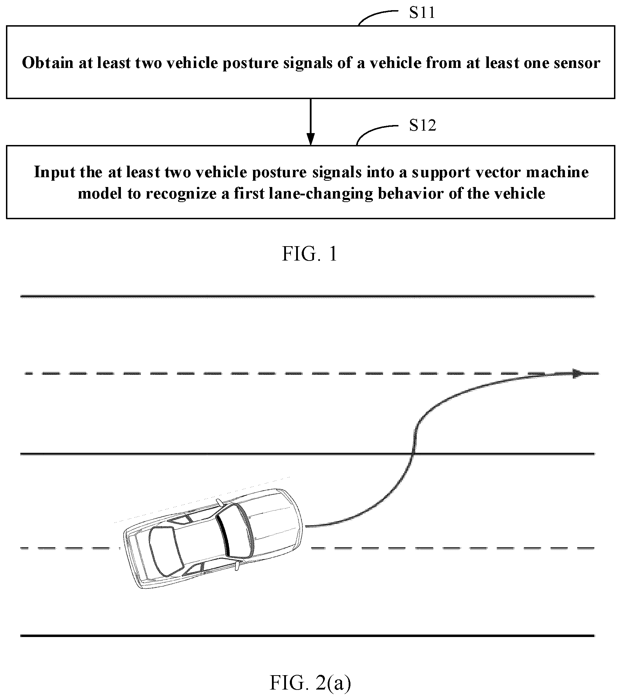

Referring to a schematic diagram of a working procedure shown in FIG. 1, a method for recognizing a lane-changing behavior of a vehicle provided in this embodiment of this application includes the following steps.

Step S11: Obtain at least two vehicle posture signals of a vehicle from at least one sensor, where the at least two vehicle posture signals include a first vehicle posture signal and a second vehicle posture signal.

The first vehicle posture signal is a signal obtained from the at least one sensor at a first moment, and the second vehicle posture signal is a signal obtained from the at least one sensor at a second moment.

A sensor is installed in the vehicle, and the sensor may periodically measure a vehicle posture signal. In this embodiment of this invention, vehicle posture signals measured by a same sensor at different moments may be obtained, to recognize a lane-changing behavior of the vehicle. The sensor includes at least one of a steering angle sensor, an inertial navigation sensor, or a wheel speed sensor. The vehicle posture signal includes at least one of a steering angle, a steering speed, a yaw speed, lateral acceleration, or a vehicle speed.

When the at least one sensor includes the steering angle sensor, the at least two vehicle posture signals include steering angles respectively obtained at the first moment and the second moment, and/or steering speeds respectively obtained at the first moment and the second moment. When the at least one sensor includes the inertial navigation sensor, the at least two vehicle posture signals include yaw speeds respectively obtained at the first moment and the second moment, and/or lateral acceleration respectively obtained at the first moment and the second moment. When the at least one sensor includes the wheel speed sensor, the at least two vehicle posture signals include vehicle speeds respectively obtained at the first moment and at the second moment.

Step S12: Input the at least two vehicle posture signals into a support vector machine model to recognize a first lane-changing behavior of the vehicle.

The support vector machine model is configured to recognize a lane-changing behavior of a vehicle. After the at least two vehicle posture signals are input into the support vector machine model, the support vector machine model outputs a recognition result. In this embodiment of this invention, the first lane-changing behavior of the vehicle is determined by using the recognition result output by the support vector machine model.

When the solution provided in this embodiment of this invention, is used to recognize a lane-changing behavior of a vehicle, at least two vehicle posture signals of the vehicle are first obtained from at least one sensor, then the at least two vehicle posture signals are input into the support vector machine model, and the first lane-changing behavior of the vehicle is recognized based on an output result of the support vector machine model.

It may be learned from the solution provided in this embodiment of this invention that, when the solution in this embodiment of this invention is used to recognize a lane-changing behavior of a vehicle, a vehicle posture signal obtained by using a sensor rather than a road image photographed by a camera is relied on. Therefore, no camera needs to be additionally configured in the vehicle. Compared with the conventional technology, a requirement for vehicle configuration is reduced in the solution in this embodiment of this invention.

In addition, in the solution provided in this embodiment of this invention, a lane-changing behavior of a vehicle is recognized by using a vehicle posture signal, and no image analysis needs to be performed on a road image. Moreover, compared with the road image, the vehicle posture signal is not susceptible to an external environment. Therefore, compared with the conventional technology, accuracy of recognizing a lane-changing behavior can be improved in the solution provided in this embodiment of this invention.

Correspondingly, because a recognition result in this embodiment of this invention is not susceptible to the external environment, robustness of recognizing a lane-changing behavior of a vehicle is improved.

Further, in the conventional technology, in each process of recognizing a lane-changing behavior, image analysis needs to be performed on the road image, and the image analysis usually requires a large amount of calculation. As a result, a calculation amount is relatively large in each time of recognizing a lane-changing behavior.

However, in this embodiment of this invention, the vehicle posture signal is input into the support vector machine model, and the first lane-changing behavior of the vehicle is recognized by using the support vector machine model. In addition, the support vector machine model may be pre-obtained by training the vehicle posture signal, and in each subsequent process of recognizing a lane-changing behavior, the determined support vector machine model can be directly used, and the support vector machine model does not need to be repeatedly obtained. Therefore, compared with the solution in the conventional technology, a calculation amount is relatively small in the solution provided in this embodiment of this invention, and a requirement for a calculation capability of an apparatus for recognizing a lane-changing behavior of a vehicle is relatively low in this invention.

Correspondingly, the method for recognizing a lane-changing behavior of a vehicle provided in this embodiment of this invention has a wider applicable range. For example, the method for recognizing a lane-changing behavior of a vehicle provided in this embodiment of this invention may be applied to a single-chip microcomputer.

In addition, because the calculation amount is relatively small in the solution provided in this embodiment of this invention, compared with the conventional technology, a lane-changing behavior of a vehicle can be quickly recognized in the solution provided in this embodiment of this invention, that is, efficiency of recognizing a lane-changing behavior of a vehicle is improved, thereby ensuring real-time quality of recognizing a lane-changing behavior of a vehicle.

According to the invention, at least two vehicle posture signals are input into the support vector machine model, to recognize a lane-changing behavior of a vehicle by using the at least two vehicle posture signals. In addition, the at least two vehicle posture signals are obtained at different moments. In other words, according to the invention, a lane-changing behavior of a vehicle is recognized by using at least two vehicle posture signals obtained in a time period. A length of the time period may be set based on a requirement for recognition precision. When the requirement for recognition precision is relatively high, the length of the time period may be appropriately prolonged, so that a lane-changing behavior of a vehicle can be recognized by using a relatively large quantity of vehicle posture signals. When the requirement for recognition precision is relatively low, the length of the time period may be appropriately shortened, so that efficiency of recognizing a lane-changing behavior can be improved.

In addition, in the solution provided in this embodiment of this invention, a lane-changing behavior of a vehicle is recognized by using at least two vehicle posture signals obtained from at least one sensor, where the sensor includes at least one of a steering angle sensor, an inertial navigation sensor, or a wheel speed sensor. The steering angle sensor, the inertial navigation sensor, and the wheel speed sensor are all sensors commonly used in a vehicle, and the several sensors are installed in the vehicle at delivery of the vehicle. In other words, in the solution provided in this embodiment of this invention, the sensor installed in the vehicle is used, and the vehicle does not need to be modified. Therefore, the solution provided in this embodiment of this invention is relatively easy to implement, has a relatively wide application range, and is relatively practical.

In the solution provided in this embodiment of this invention, a lane-changing behavior of a vehicle can be recognized. The lane-changing behavior of the vehicle usually includes: changing no lane, changing to a left lane, changing to a right lane, turning to the left, turning to the right, or turning around. In the solution in this embodiment of this invention, the first lane-changing behavior of the vehicle can be recognized, and the first lane-changing behavior of the vehicle includes at least one of the following: changing no lane, changing to a left lane, changing to a right lane, turning to the left, turning to the right, or turning around.

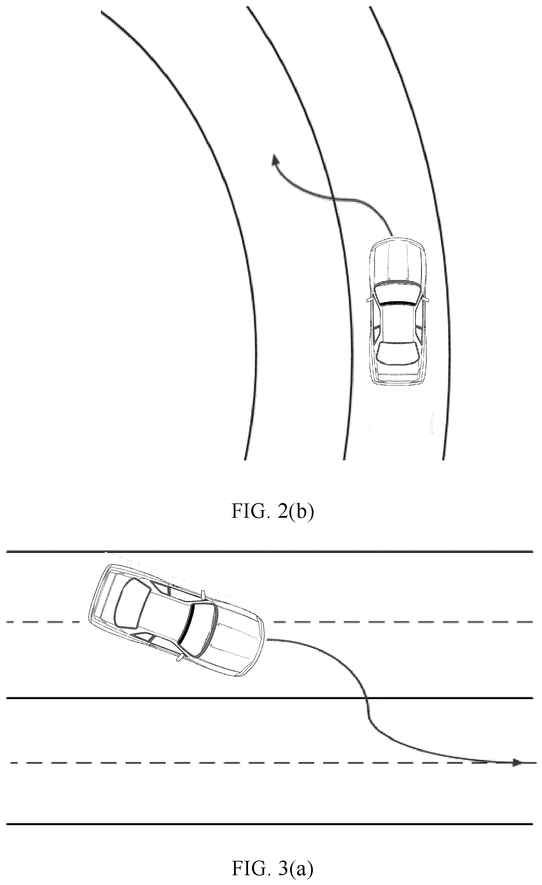

Based on different traveling routes of a vehicle, changing to a left lane usually includes changing to a left lane on a straight road and changing to a left lane on a curved road. Referring to a schematic diagram shown in FIG. 2(a), when the vehicle runs on a straight road and changes to a left lane, a lane-changing behavior of the vehicle is changing to a left lane on a straight road. Referring to a schematic diagram shown in FIG. 2(b), when the vehicle travels on a curved road and changes to a left lane, a lane-changing behavior of the vehicle is changing to a left lane on a curved road.

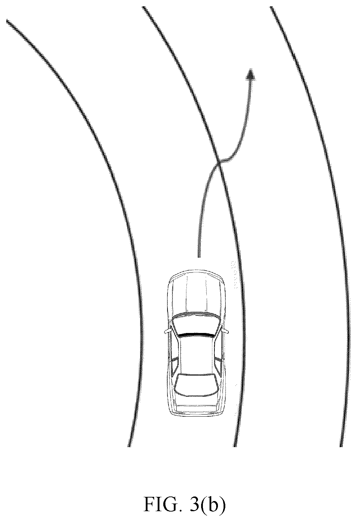

Correspondingly, based on different traveling routes of a vehicle, changing to a right lane usually includes changing to a right lane on a straight road and changing to a right lane on a curved road. Referring to a schematic diagram shown in FIG. 3(a), when the vehicle runs on a straight road and changes to a right lane, a lane-changing behavior of the vehicle is changing to a right lane on a straight road. Referring to a schematic diagram shown in FIG. 3(b), when the vehicle travels on a curved road and changes to a right lane, a lane-changing behavior of the vehicle is changing to a right lane on a curved road.

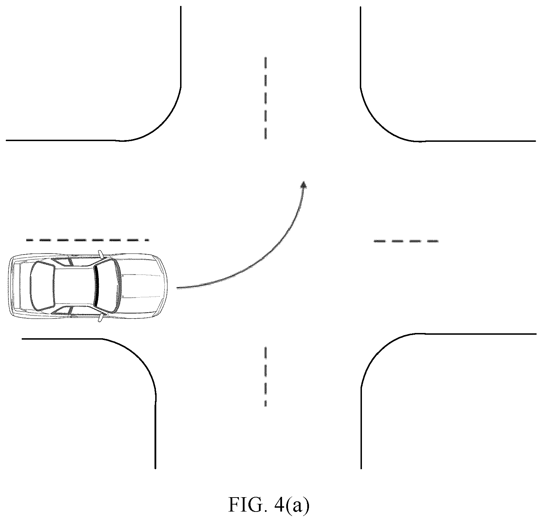

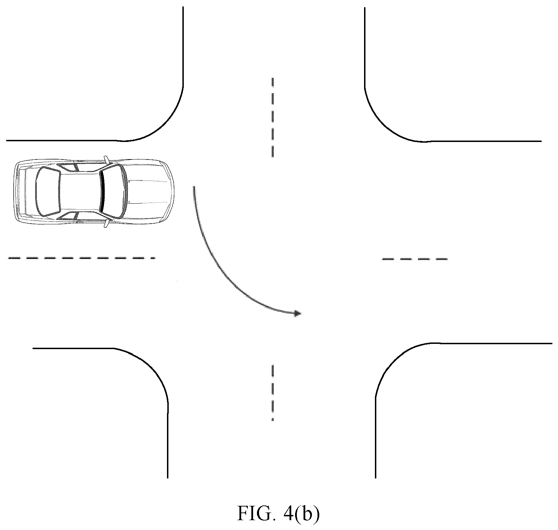

When traveling to an intersection, the vehicle usually may make a turn. Based on a direction of the turn, the turn may include a left turn and a right turn. Referring to a schematic diagram shown in FIG. 4(a), when the vehicle turns to the left, a lane-changing behavior of the vehicle is a left turn. Referring to a schematic diagram shown in FIG. 4(b), when the vehicle turns to the right, a lane-changing behavior of the vehicle is a right turn.

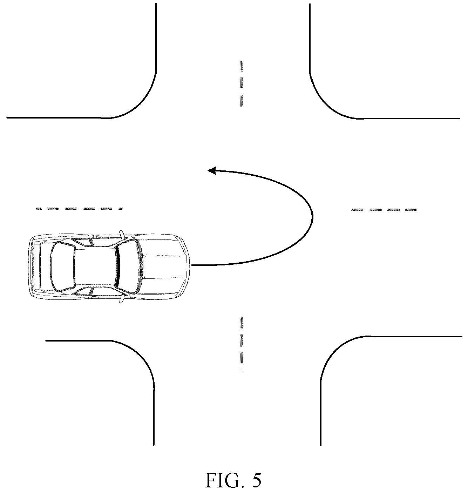

In addition, in a traveling process, the vehicle may sometimes turn around. When a lane-changing behavior of the vehicle is turning around, a schematic diagram of vehicle traveling may be shown in FIG. 5.

The solution in this embodiment of this invention can be used to recognize a plurality of types of lane-changing behaviors, and is applicable to a plurality of complex roads (for example, a straight road, a curved road, or an intersection), to meet requirements for lane-changing behavior recognition of a vehicle driver in a plurality of driving scenarios.

Step S12 provides an operation of inputting the at least two vehicle posture signals into the support vector machine model to recognize the first lane-changing behavior of the vehicle. The support vector machine model outputs a result after obtaining the at least two input vehicle posture signals, and each output result of the support vector machine model corresponds to a lane-changing behavior. For example, the support vector machine model may output a result at intervals of a period. In this embodiment of this invention, the first lane-changing behavior is determined based on the output result of the support vector machine model.

In a feasible implementation, the inputting the at least two vehicle posture signals into a support vector machine model to recognize a first lane-changing behavior of the vehicle includes:
determining the first lane-changing behavior of the vehicle based on one output result of the support vector machine model.

In this implementation, the output result of the support vector machine model is directly used as the first lane-changing behavior of the vehicle, so that in this implementation, a calculation amount is relatively small and efficiency of recognizing a lane-changing behavior of a vehicle is relatively high.

Alternatively, in another feasible implementation, the inputting the at least two vehicle posture signals into a support vector machine model to recognize a first lane-changing behavior of the vehicle includes:
determining the first lane-changing behavior of the vehicle based on at least two output results of the support vector machine model.

An abnormal recognition result may sometimes occur in the output results of the support vector machine model. For example, in a traveling process of a vehicle, a driver sometimes corrects a steering wheel. In this case, an output result of the support vector machine model may be abnormal.

In the foregoing implementation, the first lane-changing behavior of the vehicle is determined based on at least two output results of the support vector machine model, so that impact of an abnormal output result on recognition of a lane-changing behavior can be reduced, thereby improving accuracy of recognizing a lane-changing behavior.

In this embodiment of this invention, when the first lane-changing behavior of the vehicle is determined based on at least two output results of the support vector machine model, the following step may be performed:
when consecutive n output results of the support vector machine model each are a first target lane-changing behavior, determining that the first target lane-changing behavior is the first lane-changing behavior of the vehicle, where n is a positive integer greater than or equal to 2.

In this embodiment of this invention, if the consecutive n output results of the support vector machine model are the same, it indicates that there is a relatively small possibility that an abnormal output result exists the consecutive n output results. In this case, it is determined that the consecutive n output results each are the first lane-changing behavior of the vehicle, thereby improving accuracy of recognizing a lane-changing behavior of a vehicle.

In addition, the solution in this embodiment of this invention can be used to recognize a plurality of types of lane-changing behaviors. In this case, values of n may be the same or may be different for different first target lane-changing behaviors.

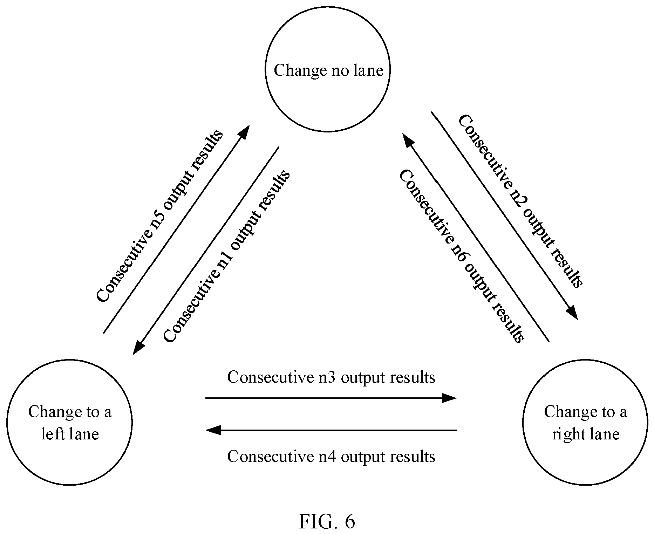

For example, referring to a schematic diagram shown in FIG. 6, if the vehicle is in a state of changing no lane, that is, the vehicle keeps traveling on a straight route, and in a subsequent period of time, consecutive n1 output results of the support vector machine model each are changing to a left lane, it may be determined that the vehicle has a lane-changing behavior of changing to a left lane, that is, the first lane-changing behavior of the vehicle is changing to a left lane, where n1 is a positive integer greater than or equal to 2.

In addition, if the vehicle is in the state of changing no lane, that is, the vehicle keeps traveling on a straight route, and in a subsequent period of time, consecutive n2 output results of the support vector machine model each are changing to a right lane, that is, the first lane-changing behavior of the vehicle is changing to a right lane, it may be determined that the vehicle has a lane-changing behavior of changing to a right lane, where n2 is a positive integer greater than or equal to 2.

Alternatively, if the vehicle is in a state of changing to a left lane, and in a subsequent period of time, n3 output results consecutively output by the support vector machine model each are changing to a right lane, that is, the first lane-changing behavior of the vehicle is changing to a right lane, it indicates that the vehicle has a lane-changing behavior of changing to a right lane, where n3 is a positive integer greater than or equal to 2.

If the vehicle is in a state of changing to a right lane, and in a subsequent period of time, n4 output results consecutively output by the support vector machine model each are changing to a left lane, that is, the first lane-changing behavior of the vehicle is changing to a left lane, it indicates that the vehicle has a lane-changing behavior of changing to a left lane, where n4 is a positive integer greater than or equal to 2.

Alternatively, if the vehicle is in the state of changing to a left lane, and in a subsequent period of time, n5 output results consecutively output by the support vector machine model each are changing no lane, that is, the first lane-changing behavior of the vehicle is changing no lane, it indicates that the vehicle has a lane-changing behavior of changing no lane, where n5 is a positive integer greater than or equal to 2.

If the vehicle is in the state of changing to a right lane, and in a subsequent period of time, n6 output results consecutively output by the support vector machine model each are changing no lane, that is, the first lane-changing behavior of the vehicle is changing no lane, it indicates that the vehicle has a lane-changing behavior of changing no lane, where n6 is a positive integer greater than or equal to 2.

Values of n1, n2, n3, n4, n5, and n6 may be the same or may be different. This is not limited in this invention.

In addition, specific values of n1, n2, n3, n4, n5, and n6 may be further adjusted based on a requirement for recognition accuracy. Generally, when a requirement for accuracy of recognizing a lane-changing behavior of a vehicle is relatively high, n1, n2, n3, n4, n5, and n6 may be adjusted to relatively large values; or when a requirement for accuracy of recognizing a lane-changing behavior of a vehicle is relatively small, n1, n2, n3, n4, n5, and n6 may be adjusted to relatively small values.

Alternatively, in another feasible design, the determining the first lane-changing behavior of the vehicle based on at least two output results of the support vector machine model may include the following step:
when at least w output results in consecutive t output results of the support vector machine model each are a second target lane-changing behavior, determining that the second target lane-changing behavior is the first lane-changing behavior of the vehicle, where w is a positive integer greater than or equal to 2, and t is a positive integer greater than w.

In this embodiment of this invention, if the at least w output results in the consecutive t output results of the support vector machine model are all the same, it indicates that there is a relatively small possibility that an abnormal output result exists in the at least w output results. In addition, in the t output results, an output result different from the at least w output results is usually an abnormal output result. In this case, the second target lane-changing behavior corresponding to the at least w output results is determined as the first lane-changing behavior of the vehicle, so that impact of an abnormal output result on recognition of a lane-changing behavior can be reduced, thereby improving accuracy of recognizing a lane-changing behavior of a vehicle.

In addition, the solution in this embodiment of this invention can be used to recognize a plurality of types of lane-changing behaviors. In this case, values of w may be the same or may be different for different second target lane-changing behaviors. Correspondingly, values of t may be the same or may be different for different second target lane-changing behaviors.

For example, if the vehicle is in a state of changing no lane, that is, the vehicle keeps traveling on a straight route, and in a subsequent period of time, at least w1 output results in consecutive t1 output results of the support vector machine model each are changing to a left lane, it may be determined that the vehicle has a lane-changing behavior of changing to a left lane, that is, the first lane-changing behavior of the vehicle is changing to a left lane, where w1 is a positive integer greater than or equal to 2, and t1 is a positive integer greater than w1.

Alternatively, if the vehicle is in the state of changing no lane, and in a subsequent period of time, at least w2 output results in consecutive t2 output results of the support vector machine model each are changing to a right lane, it may be determined that the vehicle has a lane-changing behavior of changing to a right lane, that is, the first lane-changing behavior of the vehicle is changing to a right lane, where w2 is a positive integer greater than or equal to 2, and t2 is a positive integer greater than w2.

In addition, if the vehicle is in a state of changing to a left lane, and in a subsequent period of time, at least w3 output results in t3 output results consecutively output by the support vector machine model each are changing to a right lane, it indicates that the vehicle has a lane-changing behavior of changing to a right lane, that is, the first lane-changing behavior of the vehicle is changing to a right lane, where w3 is a positive integer greater than or equal to 2, and t3 is a positive integer greater than w3.

If the vehicle is in a state of changing to a right lane, and in a subsequent period of time, at least w4 output results in t4 output results consecutively output by the support vector machine model each are changing to a left lane, it indicates that the vehicle has a lane-changing behavior of changing to a left lane, that is, the first lane-changing behavior of the vehicle is changing to a left lane, where w4 is a positive integer greater than or equal to 2, and t4 is a positive integer greater than w4.

Alternatively, if the vehicle is in the state of changing to a left lane, and in a subsequent period of time, at least w5 output results in t5 output results consecutively output by the support vector machine model each are changing no lane, it indicates that the vehicle has a lane-changing behavior of changing no lane, that is, the first lane-changing behavior of the vehicle is changing no lane, where w5 is a positive integer greater than or equal to 2, and t5 is a positive integer greater than w5.

If the vehicle is in the state of changing to a right lane, and in a subsequent period of time, at least w6 output results in t6 output results consecutively output by the support vector machine model each are changing no lane, it indicates that the vehicle has a lane-changing behavior of changing no lane, that is, the first lane-changing behavior of the vehicle is changing no lane, where w6 is a positive integer greater than or equal to 2, and t6 is a positive integer greater than w6.

In the foregoing examples, t1, t2, t3, t4, t5, and t6 may have a same value or may have different values. Correspondingly, w1, w2, w3, w4, w5, and w6 may have a same value or may have different values. This is not limited in this invention.

In addition, specific values of t1, t2, t3, t4, t5, and t6 and specific values of w1, w2, w3, w4, w5, and w6 may be further adjusted based on a requirement for recognition accuracy. Generally, when a requirement for accuracy of recognizing a lane-changing behavior of a vehicle is relatively high, w1/t1, w2/t2, w3/t3, w4/t4, w5/t5, and w6/t6 may be adjusted to relatively large values by adjusting t1, t2, t3, t4, t5, and t6, and w1, w2, w3, w4, w5, and w6; or when a requirement for accuracy of recognizing a lane-changing behavior of a vehicle is relatively low, w1/t1, w2/t2, w3/t3, w4/t4, w5/t5, and w6/t6 may be adjusted to relatively small values.

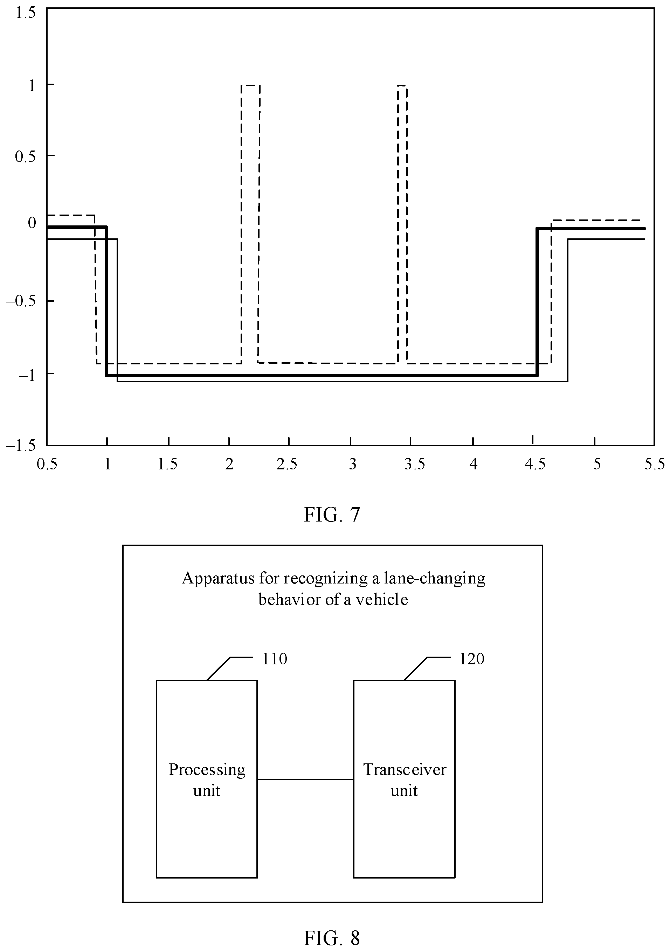

Further, to clarify an advantage of the foregoing manner of determining a first lane-changing behavior of a vehicle, this embodiment of this invention further provides FIG. 7. In a schematic diagram shown in FIG. 7, a horizontal axis represents time, which is in units of seconds (s), and a vertical axis is used to represent a lane-changing behavior. When a value of the vertical axis is 0, a represented lane-changing behavior is changing no lane; when a value of the vertical axis is 1, a represented lane-changing behavior is changing to a left lane; or when a value of the vertical axis is -1, a represented lane-changing behavior is changing to a right lane. In addition, FIG. 7 includes three lines. A dashed line represents an output result of the support vector machine model, a thicker straight line represents an actual lane-changing behavior of a vehicle, and a thinner straight line represents a first lane-changing behavior determined in the manner of determining a first lane-changing behavior of a vehicle provided in this embodiment of this invention, that is, a lane-changing behavior determined after an abnormal output result is filtered out in this embodiment of this invention.

Referring to the dashed line in FIG. 7, it may be learned that output results of the support vector machine model between 1 second and 2 seconds each are changing to a right lane, and output results between 2.1 seconds and 2.2 seconds each are changing to a left lane, output results between 2.2 seconds and 3.4 seconds each are changing to a right lane, an output result in 3.5 second is changing to a left lane, and output results between 3.5 seconds and 4.5 seconds each are changing to a right lane. In this case, it may be determined that the output results of the support vector machine model between 2.1 and 2.2 seconds and the output result in the 3.5 second are abnormal output results.

Through comparison between the output results of the support vector machine model in FIG. 7, a lane-changing behavior recognized by using the solution provided in this embodiment of this invention, and an actual lane-changing behavior of a vehicle, it may be learned that the output results of the support vector machine model include two abnormal output results. However, the solution in this embodiment of this invention can be used to filter out the abnormal output results, and a lane-changing behavior determined by using the solution in this embodiment of this invention is closer to the actual lane-changing behavior of the vehicle, and has higher accuracy.

In this embodiment of this invention, a lane-changing behavior of a vehicle is determined based on an output result of the support vector machine model. The support vector machine model may be pre-determined through training.

In a feasible design, the support vector machine model is determined by training vehicle posture signals obtained when the vehicle has lane-changing behaviors in different vehicle traveling environments and the lane-changing behaviors. The different vehicle traveling environments include at least one of different vehicle traveling roads, different traffic flow densities, different traveling styles, or different vehicle traveling speeds.

The different vehicle traveling roads usually include at least two of a straight road, a curved road, and a crossroad. In this embodiment of this invention, vehicle posture signals obtained when the vehicle has lane-changing behaviors during traveling on different vehicle traveling roads and the lane-changing behaviors may be trained, so that the support vector machine model obtained through training can recognize lane-changing behaviors on different vehicle traveling roads.

The traffic flow density is also referred to as a vehicle flow density, which usually refers to a quantity of vehicles in a lane of a unit length (which is usually 1 km) that are in a road segment or direction at a specific moment, and is used to indicate a vehicle density on a road. In this embodiment of this invention, vehicle posture signals obtained when the vehicle has lane-changing behaviors during traveling in different traffic flow densities and the lane-changing behaviors may be trained, so that the support vector machine model obtained through training can recognize lane-changing behaviors in different traffic flow densities.

When different drivers drive the vehicle, traveling styles of the vehicle are usually different. For example, when a driver with relatively rich driving experience drives the vehicle, a traveling style of the vehicle is usually "relatively stable", the vehicle travels relatively smoothly, and a sense of acceleration and a sense of deceleration are not obvious. However, when a driver without rich driving experience drives the vehicle, a traveling style of the vehicle is usually "relatively cautious", and a vehicle speed is relatively slow. In this embodiment of this invention, vehicle posture signals obtained when the vehicle has lane-changing behaviors during traveling in different traveling styles of the vehicle and the lane-changing behaviors may be trained, so that the support vector machine model obtained through training can recognize lane-changing behaviors in different traveling styles.

In addition, a vehicle traveling speed in a traveling process of the vehicle usually changes. In this embodiment of this invention, vehicle posture signals obtained when the vehicle has lane-changing behaviors during traveling at different vehicle traveling speeds and the lane-changing behaviors may be trained, so that the support vector machine model obtained through training can recognize lane-changing behaviors at different vehicle traveling speeds.

In this embodiment of this invention, experiments are performed in different vehicle traveling environments to obtain vehicle posture signals when the vehicle has various lane-changing behaviors in different vehicle traveling environments. The vehicle posture signals are used as test data and are divided into a training set and a test set based on a specific proportion, and are trained through machine learning, to obtain the support vector machine model.

The support vector machine model applied to this embodiment of this invention is determined by training vehicle posture signals and lane-changing behaviors in different vehicle traveling environments. Therefore, the support vector machine model can recognize lane-changing behaviors in different vehicle traveling environments, and is relatively widely used.

Further, in this embodiment of this invention, the following step is included:
normalizing the at least two vehicle posture signals, and inputting at least two normalized vehicle posture signals into the support vector machine model.

In this case, the at least two vehicle posture signals input into the support vector machine model are normalized vehicle posture signals. The at least two vehicle posture signals are normalized, so that accuracy of processing the vehicle posture signal by the support vector machine model can be improved, thereby further improving accuracy of recognizing a lane-changing behavior.

According to the invention, the method further provides the following steps:
after the vehicle posture signals are obtained, removing an abnormal signal in the vehicle posture signals; and
if there are more than two types of remaining vehicle posture signals after the abnormal signal is removed, and different types of vehicle posture signals are obtained at different frequencies, performing interpolation processing on the different types of vehicle posture signals, where the different types of vehicle posture signals obtained after the interpolation processing have a same frequency.

In this case, the vehicle posture signals obtained after the interpolation processing are further normalized, and normalized vehicle posture signals are input into the support vector machine model.

The abnormal signal is usually a signal that mutates in the vehicle posture signals. For example, a mutation threshold may be set. When a difference between a specific vehicle posture signal and a previously obtained vehicle posture signal is greater than the mutation threshold, it is determined that the vehicle posture signal is a mutant signal, that is, the vehicle posture signal is an abnormal signal.

The abnormal signal is removed to further improve accuracy of recognizing a lane-changing behavior.

In addition, detection frequencies of different sensors may be different, so that different types of vehicle posture signals obtained by different sensors have different frequencies. In this case, after the abnormal signal is removed, interpolation processing may be performed on remaining vehicle posture signals, where the different types of vehicle posture signals obtained after the interpolation processing have a same frequency, so that the vehicle posture signals keep synchronous, thereby further improving accuracy of recognizing a lane-changing behavior.

Apparatus embodiments of this invention are provided below, and may be configured to perform the method embodiment of this invention. For details not disclosed in the apparatus embodiments of this invention, refer to the method embodiments of this invention.

Corresponding to the foregoing method embodiment, an embodiment of this invention discloses an apparatus for recognizing a lane-changing behavior of a vehicle. Referring to a schematic structural diagram shown in FIG. 8, the apparatus for recognizing a lane-changing behavior of a vehicle includes a processing unit 110 and a transceiver unit 120.

The transceiver unit 120 is configured to obtain at least two vehicle posture signals of a vehicle from at least one sensor, where the at least two vehicle posture signals include a first vehicle posture signal and a second vehicle posture signal.

The first vehicle posture signal is a signal obtained from the at least one sensor at a first moment, and the second vehicle posture signal is a signal obtained from the at least one sensor at a second moment.

The processing unit 110 is configured to input the at least two vehicle posture signals into a support vector machine model to recognize a first lane-changing behavior of the vehicle.

The support vector machine model is configured to recognize a lane-changing behavior of a vehicle. After the at least two vehicle posture signals are input into the support vector machine model, the support vector machine model outputs a recognition result. In this embodiment of this invention, the first lane-changing behavior of the vehicle is determined by using the recognition result output by the support vector machine model.

When the solution in this embodiment of this invention is used to recognize a lane-changing behavior of a vehicle, a vehicle posture signal obtained by using a sensor rather than a road image photographed by a camera is relied on. Therefore, no camera needs to be additionally configured in the vehicle. Compared with the conventional technology, a requirement for vehicle configuration is reduced in the solution in this embodiment of this invention.

Further, in the solution provided in this embodiment of this invention, a lane-changing behavior of a vehicle is recognized by using a vehicle posture signal, and no image analysis needs to be performed on a road image. Moreover, compared with the road image, the vehicle posture signal is not susceptible to an external environment. Therefore, compared with the conventional technology, accuracy of recognizing a lane-changing behavior can be improved in the solution provided in this embodiment of this invention.

Correspondingly, because a recognition result in this embodiment of this invention is not susceptible to the external environment, robustness of recognizing a lane-changing behavior of a vehicle is improved.

In addition, in the apparatus in this embodiment of this invention, the first lane-changing behavior of the vehicle is recognized by using the support vector machine model. In addition, the support vector machine model may be pre-obtained by training the vehicle posture signal, and in each subsequent process of recognizing a lane-changing behavior, the determined support vector machine model can be directly used, and the support vector machine model does not need to be repeatedly obtained. Therefore, compared with the solution in the conventional technology, a calculation amount is relatively small in the solution provided in this embodiment of this invention.

In the solution provided in this embodiment of this invention, a lane-changing behavior of a vehicle is recognized by using at least two vehicle posture signals obtained from at least one sensor, where the sensor includes at least one of a steering angle sensor, an inertial navigation sensor, or a wheel speed sensor.

Correspondingly, the vehicle posture signal includes at least one of a steering angle, a steering speed, a yaw speed, lateral acceleration, or a vehicle speed.

Further, in the apparatus for recognizing a lane-changing behavior of a vehicle provided in this embodiment of this invention, the processing unit is specifically configured to determine the first lane-changing behavior of the vehicle based on one output result of the support vector machine model; or
the processing unit is specifically configured to determine the first lane-changing behavior of the vehicle based on at least two output results of the support vector machine model.

In the apparatus for recognizing a lane-changing behavior of a vehicle provided in this embodiment of this invention, when consecutive n output results of the support vector machine model each are a first target lane-changing behavior, the processing unit is specifically configured to determine that the first target lane-changing behavior is the first lane-changing behavior of the vehicle, where n is a positive integer greater than or equal to 2; or
when at least w output results in consecutive t output results of the support vector machine model each are a second target lane-changing behavior, the processing unit is specifically configured to determine that the second target lane-changing behavior is the first lane-changing behavior of the vehicle, where w is a positive integer greater than or equal to 2, and t is a positive integer greater than w.

In a feasible design, in the apparatus for recognizing a lane-changing behavior of a vehicle provided in this embodiment of this invention, the support vector machine model is determined by training vehicle posture signals obtained when the vehicle has lane-changing behaviors in different vehicle traveling environments and the lane-changing behaviors. The different vehicle traveling environments include at least one of different vehicle traveling roads, different traffic flow densities, different traveling styles, or different vehicle traveling speeds.

The support vector machine model applied to this embodiment of this invention is determined by training vehicle posture signals and lane-changing behaviors in different vehicle traveling environments. Therefore, the support vector machine model can recognize lane-changing behaviors in different vehicle traveling environments, and is relatively widely used.

Further, in the apparatus for recognizing a lane-changing behavior of a vehicle provided in this embodiment of this invention, the processing unit is further configured to normalize the at least two vehicle posture signals, and input at least two normalized vehicle posture signals into the support vector machine model.

In this case, the at least two vehicle posture signals input into the support vector machine model are normalized vehicle posture signals. The at least two vehicle posture signals are normalized, so that accuracy of processing the vehicle posture signal by the support vector machine model can be improved, thereby further improving accuracy of recognizing a lane-changing behavior.

In addition, in the apparatus for recognizing a lane-changing behavior of a vehicle provided in this embodiment of this invention, the first lane-changing behavior of the vehicle includes at least one of the following:
changing no lane, changing to a left lane, changing to a right lane, turning to the left, turning to the right, or turning around.

In other words, the apparatus for recognizing a lane-changing behavior of a vehicle provided in this embodiment of this invention can recognize a plurality of types of lane-changing behaviors.

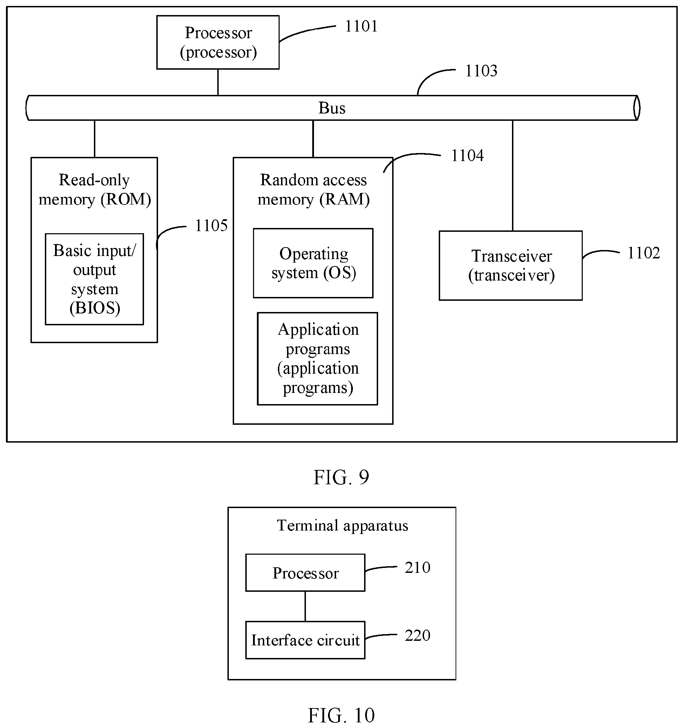

Correspondingly, corresponding to the foregoing method for recognizing a lane-changing behavior of a vehicle, an embodiment of this invention further provides a terminal apparatus. Referring to a schematic structural diagram shown in FIG. 9, the terminal apparatus includes a processor 1101 and a memory. The memory stores a program running on the processor. When the processor executes the program, all or some of the steps in the embodiment corresponding to FIG. 1 are implemented.

Further, the terminal apparatus may include a transceiver 1102 and a bus 1103, and the memory includes a random access memory 1104 and a read-only memory 1105.

The processor is separately coupled to the transceiver, the random access memory, and the read-only memory through the bus. When the terminal apparatus needs to be run, a basic input/output system fixed in the read-only memory or a bootloader boot system in an embedded system is started to guide the apparatus to enter a normal running state. After entering the normal running state, the apparatus runs an application program and an operating system in the random access memory, so that the terminal apparatus performs all or some of the steps in the embodiment corresponding to FIG. 1.

The apparatus in this embodiment of the present invention may correspond to the apparatus for recognizing a lane-changing behavior of a vehicle in the embodiment corresponding to FIG. 8. In addition, the processor in the apparatus may implement functions of the apparatus in the embodiment corresponding to FIG. 8 and/or steps and methods implemented by the apparatus. For brevity, details are not described herein again.

Correspondingly, corresponding to the foregoing method for recognizing a lane-changing behavior of a vehicle, an embodiment of this invention provides a terminal apparatus. Referring to a schematic diagram shown in FIG. 10, the terminal apparatus includes a processor 210 and an interface circuit 220.

The interface circuit 220 is configured to receive code instructions and transmit the code instructions to the processor.

The processor 210 is configured to run the code instructions to perform the method for recognizing a lane-changing behavior of a vehicle provided in the embodiment corresponding to FIG. 1.

The terminal apparatus may include one chip, or may include a chip module including a plurality of chips. Alternatively, the terminal may be in another form, which is not limited in this invention.

In specific implementation, an embodiment of this invention further provides a computer-readable storage medium, where the computer-readable storage medium includes instructions. When the computer-readable storage medium disposed in any device is run on a computer, all or some of the steps in the embodiment corresponding to FIG. 1 may be implemented. The foregoing storage medium may include: a magnetic disk, an optical disc, a read-only memory (English: read-only memory, ROM for short), or a random access memory (English: random access memory, RAM for short).

In addition, another embodiment of this invention further provides a computer program product including instructions. When the computer program product is run on an electronic device, the electronic device is enabled to implement all or some of the steps in the embodiment corresponding to FIG. 1.

The various illustrative logical units and circuits described in the embodiments of this invention may implement or operate the described functions by using a general-purpose processor, a digital information processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital information processor and a microprocessor, a plurality of microprocessors, one or more microprocessors with a digital information processor core, or any other similar configuration.

Steps of the methods or algorithms described in embodiments of this invention may be directly embedded into hardware, a software unit executed by a processor, or a combination thereof. The software unit may be stored in a RAM memory, a flash memory, a ROM memory, an EPROM memory, an EEPROM memory, a register, a hard disk drive, a removable magnetic disk, a CD-ROM, or a storage medium of any other form in the art. For example, the storage medium may connect to a processor, so that the processor can read information from the storage medium and write information into the storage medium. Optionally, the storage medium may alternatively be integrated into the processor. The processor and the storage medium may be arranged in an ASIC, and the ASIC may be arranged in UE. Optionally, the processor and the storage medium may be arranged in different components of the UE.

It should be understood that sequence numbers of the foregoing processes do not mean execution sequences in embodiments of this invention. The execution sequences of the processes should be determined based on functions and internal logic of the processes, and should not constitute any limitation on implementation processes of embodiments of this invention.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedures or functions according to the embodiments of this invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The available medium may be a magnetic medium (for example, a floppy disk, a hard disk drive, or a magnetic tape), an optical medium (for example, a DVD), a semiconductor medium (for example, a Solid State Disk (SSD)), or the like.

Same or similar parts of embodiments of this specification may be referred to each other, and each embodiment focuses on a difference from another embodiment. Especially, apparatus and system embodiments are basically similar to a method embodiment, and therefore are described briefly; for related parts, refer to partial descriptions in the method embodiment.

A person skilled in the art may clearly understand that, the technologies in embodiments of the present invention may be implemented by software in addition to a necessary general hardware platform. Based on such an understanding, the technical solutions of embodiments of the present invention essentially or the part contributing to the conventional technology may be implemented in a form of a software product. The computer software product is stored in a storage medium, such as a ROM/RAM, a magnetic disk, or an optical disc, and includes several instructions for instructing a computer device (which may be a personal computer, a server, or a network device) to perform the methods described in embodiments or some parts of embodiments of the present invention.

Same or similar parts of the embodiments of this specification may be referred to each other. In particular, for the embodiment of the road constraint determining apparatus disclosed in this invention, because the apparatus embodiment is basically similar to the method embodiment, the apparatus embodiment is described relatively simply. For related parts, refer to descriptions of the method embodiment.

The foregoing descriptions are implementations of the present invention, but are not intended to limit the protection scope of the present invention, as defined by the appended claims.

## Claims

1. A method for recognizing a lane-changing behavior of a vehicle, comprising:
obtaining at least two vehicle posture signals of a vehicle from at least one sensor (S11), wherein the at least two vehicle posture signals comprise a first vehicle posture signal and a second vehicle posture signal, wherein
the first vehicle posture signal is a signal obtained from the at least one sensor at a first moment, and the second vehicle posture signal is a signal obtained from the at least one sensor at a second moment; and
the method further comprises:
after the at least two vehicle posture signals are obtained, removing an abnormal signal in the at least two vehicle posture signals; and
if there are more than two types of remaining vehicle posture signals after the abnormal signal is removed, and the more than two types of the remaining vehicle posture signals are obtained at different frequencies, performing interpolation processing on the more than two types of the remaining vehicle posture signals, where the more than two types of the remaining vehicle posture signals obtained after the interpolation processing have a same frequency;
the more than two types of the remaining vehicle posture signals that have the same frequency obtained after the interpolation processing are further normalized, and the normalized vehicle posture signals are input into a support vector machine model to recognize a first lane-changing behavior of the vehicle (S12).

2. The method according to claim 1, wherein
the sensor comprises at least one of a steering angle sensor, an inertial navigation sensor, or a wheel speed sensor; and
the vehicle posture signal comprises at least one of a steering angle, a steering speed, a yaw speed, lateral acceleration, or a vehicle speed.

3. The method according to claim 1 or 2, wherein the inputting the at least two vehicle posture signals into a support vector machine model to recognize a first lane-changing behavior of the vehicle comprises:
determining the first lane-changing behavior of the vehicle based on one output result of the support vector machine model; or
determining the first lane-changing behavior of the vehicle based on at least two output results of the support vector machine model.

4. The method according to claim 3, wherein the determining the first lane-changing behavior of the vehicle based on at least two output results of the support vector machine model comprises:
when consecutive n output results of the support vector machine model each are a first target lane-changing behavior, determining that the first target lane-changing behavior is the first lane-changing behavior of the vehicle, wherein n is a positive integer greater than or equal to 2; or
when at least w output results in consecutive t output results of the support vector machine model each are a second target lane-changing behavior, determining that the second target lane-changing behavior is the first lane-changing behavior of the vehicle, wherein w is a positive integer greater than or equal to 2, and t is a positive integer greater than w.

5. The method according to any one of claims 1 to 4, wherein
the support vector machine model is determined by training vehicle posture signals obtained when the vehicle has lane-changing behaviors in different vehicle traveling environments and the lane-changing behaviors, and the different vehicle driving environments comprise at least one of different vehicle driving roads, different traffic flow densities, different driving styles, or different vehicle driving speeds.

6. The method according to any one of claims 1 to 5, wherein
the first lane-changing behavior of the vehicle comprises at least one of the following: changing no lane, changing to a left lane, changing to a right lane, turning to the left, turning to the right, or turning around.

7. An apparatus for recognizing a lane-changing behavior of a vehicle, comprising:
a transceiver unit (120), configured to obtain at least two vehicle posture signals of a vehicle from at least one sensor, wherein the at least two vehicle posture signals comprise a first vehicle posture signal and a second vehicle posture signal, wherein
the first vehicle posture signal is a signal obtained from the at least one sensor at a first moment, and the second vehicle posture signal is a signal obtained from the at least one sensor at a second moment; and
a processing unit (110), configured to remove an abnormal signal in the at least two vehicle posture signals, after the at least two vehicle posture signals are obtained; and
if there are more than two types of remaining vehicle posture signals after the abnormal signal is removed, and the more than two types of the remaining vehicle posture signals are obtained at different frequencies, performing interpolation processing on the more than two types of the remaining vehicle posture signals, where the more than two types of the remaining vehicle posture signals obtained after the interpolation processing have a same frequency; the more than two types of the remaining vehicle posture signals that have the same frequency obtained after the interpolation processing are further normalized, and the normalized vehicle posture signals are input into a support vector machine model to recognize a first lane-changing behavior of the vehicle.

8. The apparatus according to claim 7, wherein
the sensor comprises at least one of a steering angle sensor, an inertial navigation sensor, or a wheel speed sensor; and
the vehicle posture signal comprises at least one of a steering angle, a steering speed, a yaw speed, lateral acceleration, or a vehicle speed.

9. The apparatus according to claim 7 or 8, wherein
the processing unit is specifically configured to determine the first lane-changing behavior of the vehicle based on one output result of the support vector machine model; or
the processing unit is specifically configured to determine the first lane-changing behavior of the vehicle based on at least two output results of the support vector machine model.

10. The apparatus according to claim 9, wherein
when consecutive n output results of the support vector machine model each are a first target lane-changing behavior, the processing unit is specifically configured to determine that the first target lane-changing behavior is the first lane-changing behavior of the vehicle, wherein n is a positive integer greater than or equal to 2; or
when at least w output results in consecutive t output results of the support vector machine model each are a second target lane-changing behavior, the processing unit is specifically configured to determine that the second target lane-changing behavior is the first lane-changing behavior of the vehicle, wherein w is a positive integer greater than or equal to 2, and t is a positive integer greater than w.

11. The apparatus according to any one of claims 7 to 10, wherein
the support vector machine model is determined by training vehicle posture signals obtained when the vehicle has lane-changing behaviors in different vehicle traveling environments and the lane-changing behaviors, and the different vehicle driving environments comprise at least one of different vehicle driving roads, different traffic flow densities, different driving styles, or different vehicle driving speeds.

12. A readable storage medium, wherein the readable storage medium is configured to store instructions, and when the instructions are executed, the method according to any one of claims 1 to 6 is implemented.

## Patentansprüche

1. Verfahren zum Erkennen eines Spurwechselverhaltens eines Fahrzeugs, umfassend:
Erlangen von mindestens zwei Fahrzeugpositionssignalen eines Fahrzeugs von mindestens einem Sensor (S11),
wobei die mindestens zwei Fahrzeugpositionssignale ein erstes Fahrzeugpositionssignal und ein zweites Fahrzeugpositionssignal umfassen, wobei
das erste Fahrzeugpositionssignal ein Signal ist, das von dem mindestens einen Sensor zu einem ersten Zeitpunkt erlangt wird, und das zweite Fahrzeugpositionssignal ein Signal ist, das von dem mindestens einen Sensor zu einem zweiten Zeitpunkt erlangt wird; und
wobei das Verfahren ferner Folgendes umfasst:
nachdem die mindestens zwei Fahrzeugpositionssignale erlangt wurden, Entfernen eines abnormalen Signals in den mindestens zwei Fahrzeugpositionssignalen; und
wenn mehr als zwei Arten von verbleibenden Fahrzeugpositionssignalen vorhanden sind, nachdem das abnormale Signal entfernt wurde, und die mehr als zwei Arten der verbleibenden Fahrzeugpositionssignale mit unterschiedlichen Frequenzen erlangt werden, Durchführen einer Interpolationsverarbeitung an den mehr als zwei Arten der verbleibenden Fahrzeugpositionssignale, wobei die mehr als zwei Arten der verbleibenden Fahrzeugpositionssignale, die nach der Interpolationsverarbeitung erlangt werden, eine gleiche Frequenz aufweisen;
wobei die mehr als zwei Arten der verbleibenden Fahrzeugpositionssignale, welche die gleiche Frequenz aufweisen und nach der Interpolationsverarbeitung erlangt werden, weiter normalisiert werden und die normalisierten Fahrzeugpositionssignale in ein Unterstützungsvektormaschinenmodell eingegeben werden, um ein erstes Spurwechselverhalten des Fahrzeugs zu erkennen (S12).

2. Verfahren nach Anspruch 1, wobei
der Sensor mindestens einen von einem Lenkwinkelsensor, einem Trägheitsnavigationssensor oder einem Radgeschwindigkeitssensor umfasst; und
das Fahrzeugpositionssignal mindestens eines von einem Lenkwinkel, einer Lenkgeschwindigkeit, einer Giergeschwindigkeit, einer Querbeschleunigung oder einer Fahrzeuggeschwindigkeit ist.

3. Verfahren nach Anspruch 1 oder 2, wobei das Eingeben der mindestens zwei Fahrzeugpositionssignale in ein Unterstützungsvektormaschinenmodell, um ein erstes Spurwechselverhalten des Fahrzeugs zu erkennen, Folgendes umfasst:
Bestimmen des ersten Spurwechselverhaltens des Fahrzeugs basierend auf einem Ausgabeergebnis des Unterstützungsvektormaschinenmodells; oder
Bestimmen des ersten Spurwechselverhaltens des Fahrzeugs basierend auf mindestens zwei Ausgabeergebnissen des Unterstützungsvektormaschinenmodells.

4. Verfahren nach Anspruch 3, wobei das Bestimmen des ersten Spurwechselverhaltens des Fahrzeugs basierend auf mindestens zwei Ausgabeergebnissen des Unterstützungsvektormaschinenmodells Folgendes umfasst:
wenn aufeinanderfolgende n Ausgabeergebnisse des Unterstützungsvektormaschinenmodells jeweils ein erstes Ziel-Spurwechselverhalten sind, Bestimmen, dass das erste Ziel-Spurwechselverhalten das erste Spurwechselverhalten des Fahrzeugs ist, wobei n eine positive ganze Zahl größer als oder gleich 2 ist; oder
wenn mindestens w Ausgabeergebnisse in aufeinanderfolgenden t Ausgabeergebnissen des Unterstützungsvektormaschinenmodells jeweils ein zweites Ziel-Spurwechselverhalten sind, Bestimmen,
dass das zweite Ziel-Spurwechselverhalten das erste Spurwechselverhalten des Fahrzeugs ist, wobei w eine positive ganze Zahl größer als oder gleich 2 ist und t eine positive ganze Zahl größer als w ist.

5. Verfahren nach einem der Ansprüche 1 bis 4, wobei das Unterstützungsvektormaschinenmodell durch Trainieren von Fahrzeugpositionssignalen, die erlangt werden, wenn das Fahrzeug Spurwechselverhalten in verschiedenen Fahrzeugfahrumgebungen aufweist, und der Spurwechselverhalten bestimmt wird und wobei die verschiedenen Fahrzeugfahrumgebungen mindestens eines von verschiedenen Fahrzeugfahrstraßen, verschiedenen Verkehrsflussdichten, verschiedenen Fahrstilen oder verschiedenen Fahrzeugfahrgeschwindigkeiten umfassen.

6. Verfahren nach einem der Ansprüche 1 bis 5, wobei das erste Spurwechselverhalten des Fahrzeugs mindestens eines des Folgenden umfasst: kein Spurwechsel, Wechseln auf eine linke Spur, Wechseln auf eine rechte Spur, Abbiegen nach links, Abbiegen nach rechts oder Wenden.

7. Vorrichtung zum Erkennen des Spurwechselverhaltens eines Fahrzeugs, umfassend:
eine Sendeempfängereinheit (120), die dazu konfiguriert ist, mindestens zwei Fahrzeugpositionssignale eines Fahrzeugs von mindestens einem Sensor zu erlangen, wobei die mindestens zwei Fahrzeugpositionssignale ein erstes Fahrzeugpositionssignal und
ein zweites Fahrzeugpositionssignal umfassen, wobei das erste Fahrzeugpositionssignal ein Signal ist, das von dem mindestens einen Sensor zu einem ersten Zeitpunkt erlangt wird, und das zweite Fahrzeugpositionssignal ein Signal ist, das von dem mindestens einen Sensor zu einem zweiten Zeitpunkt erlangt wird; und
eine Verarbeitungseinheit (110), die dazu konfiguriert ist, ein abnormales Signal in den mindestens zwei Fahrzeugpositionssignalen zu entfernen, nachdem die mindestens zwei Fahrzeugpositionssignale erlangt wurden; und
wenn mehr als zwei Arten von verbleibenden Fahrzeugpositionssignalen vorhanden sind, nachdem das abnormale Signal entfernt wurde, und die mehr als zwei Arten der verbleibenden Fahrzeugpositionssignale mit unterschiedlichen Frequenzen erlangt werden, Durchführen einer Interpolationsverarbeitung an den mehr als zwei Arten der verbleibenden Fahrzeugpositionssignale, wobei die mehr als zwei Arten der verbleibenden Fahrzeugpositionssignale, die nach der Interpolationsverarbeitung erlangt werden, eine gleiche Frequenz aufweisen; wobei die mehr als zwei Arten der verbleibenden Fahrzeugpositionssignale, welche die gleiche Frequenz aufweisen und nach der Interpolationsverarbeitung erlangt werden, weiter normalisiert werden und die normalisierten Fahrzeugpositionssignale in ein Unterstützungsvektormaschinenmodell eingegeben werden, um ein erstes Spurwechselverhalten des Fahrzeugs zu erkennen.

8. Vorrichtung nach Anspruch 7, wobei
der Sensor mindestens einen von einem Lenkwinkelsensor, einem Trägheitsnavigationssensor oder einem Radgeschwindigkeitssensor umfasst; und
das Fahrzeugpositionssignal mindestens eines von einem Lenkwinkel, einer Lenkgeschwindigkeit, einer Giergeschwindigkeit, einer Querbeschleunigung oder einer Fahrzeuggeschwindigkeit ist.

9. Vorrichtung nach Anspruch 7 oder 8, wobei
die Verarbeitungseinheit speziell dazu konfiguriert ist, das erste Spurwechselverhalten des Fahrzeugs basierend auf einem Ausgabeergebnis des Unterstützungsvektormaschinenmodells zu bestimmen; oder
die Verarbeitungseinheit speziell dazu konfiguriert ist, das erste Spurwechselverhalten des Fahrzeugs basierend auf mindestens zwei Ausgabeergebnissen des Unterstützungsvektormaschinenmodells zu bestimmen.

10. Vorrichtung nach Anspruch 9, wobei
wenn aufeinanderfolgende n Ausgabeergebnisse des Unterstützungsvektormaschinenmodells jeweils ein erstes Ziel-Spurwechselverhalten sind, die Verarbeitungseinheit speziell dazu konfiguriert ist, zu bestimmen, dass das erste Ziel-Spurwechselverhalten das erste Spurwechselverhalten des Fahrzeugs ist, wobei n eine positive ganze Zahl größer als oder gleich 2 ist; oder
wenn mindestens w Ausgabeergebnisse in aufeinanderfolgenden t Ausgabeergebnissen des Unterstützungsvektormaschinenmodells jeweils ein zweites Ziel-Spurwechselverhalten sind, die Verarbeitungseinheit speziell dazu konfiguriert ist, zu bestimmen, dass das zweite Ziel-Spurwechselverhalten das erste Spurwechselverhalten des Fahrzeugs ist, wobei w eine positive ganze Zahl größer als oder gleich 2 ist und t eine positive ganze Zahl größer als w ist.

11. Vorrichtung nach einem der Ansprüche 7 bis 10, wobei das Unterstützungsvektormaschinenmodell durch Trainieren von Fahrzeugpositionssignalen, die erlangt werden, wenn das Fahrzeug Spurwechselverhalten in verschiedenen Fahrzeugfahrumgebungen aufweist, und der Spurwechselverhalten bestimmt wird und wobei die verschiedenen Fahrzeugfahrumgebungen mindestens eines von verschiedenen Fahrzeugfahrstraßen, verschiedenen Verkehrsflussdichten, verschiedenen Fahrstilen oder verschiedenen Fahrzeugfahrgeschwindigkeiten umfassen.

12. Lesbares Speichermedium, wobei das lesbare Speichermedium dazu konfiguriert ist, Anweisungen zu speichern, und, wenn die Anweisungen ausgeführt werden, das Verfahren nach einem der Ansprüche 1 bis 6 implementiert wird.

## Revendications

1. Méthode de reconnaissance d'un comportement de changement de voie d'un véhicule, comprenant :
l'obtention d'au moins deux signaux de posture du véhicule d'un véhicule à partir d'au moins un capteur (S11),
dans laquelle les au moins deux signaux de posture du véhicule comprennent un premier signal de posture du véhicule et un second signal de posture du véhicule, dans laquelle
le premier signal de posture du véhicule est un signal obtenu à partir de l'au moins un capteur à un premier moment, et le second signal de posture du véhicule est un signal obtenu à partir de l'au moins un capteur à un second moment ; et
la méthode comprend également :
après l'obtention des au moins deux signaux de posture du véhicule, la suppression d'un signal anormal dans les au moins deux signaux de posture du véhicule ; et
s'il existe plus de deux types de signaux de posture du véhicule restants après la suppression du signal anormal, et que les plus de deux types de signaux de posture du véhicule restants sont obtenus à des fréquences différentes, la réalisation d'un traitement d'interpolation sur les plus de deux types de signaux de posture du véhicule restants, où les plus de deux types de signaux de posture du véhicule restants obtenus après le traitement d'interpolation ont une même fréquence ;
les plus de deux types de signaux de posture du véhicule restants qui ont la même fréquence obtenue après le traitement d'interpolation sont également normalisés, et les signaux de posture du véhicule normalisés sont entrés dans un modèle de machine à vecteur de support pour reconnaître un premier comportement de changement de voie du véhicule (S12).

2. Méthode selon la revendication 1, dans laquelle
le capteur comprend au moins l'un d'un capteur d'angle de braquage, d'un capteur de navigation inertielle, ou d'un capteur de vitesse de roue ; et
le signal de posture du véhicule comprend au moins l'un d'un angle de braquage, d'une vitesse de braquage, d'une vitesse de lacet, d'une accélération latérale, ou d'une vitesse du véhicule.

3. Méthode selon la revendication 1 ou 2, dans laquelle l'entrée des au moins deux signaux de posture du véhicule dans un modèle de machine à vecteurs de support pour reconnaître un premier comportement de changement de voie du véhicule comprend :
la détermination du premier comportement de changement de voie du véhicule sur la base d'un résultat de sortie du modèle de machine à vecteurs de support ; ou
la détermination du premier comportement de changement de voie du véhicule, sur la base d'au moins deux résultats de sortie du modèle de machine à vecteurs de support.

4. Méthode selon la revendication 3, dans laquelle la détermination du premier comportement de changement de voie du véhicule sur la base d'au moins deux résultats de sortie du modèle de machine à vecteurs de support, comprend :
lorsque n résultats de sortie consécutifs du modèle de machine à vecteurs de support correspondent chacun à un premier comportement de changement de voie cible, la détermination que le premier comportement de changement de voie cible est le premier comportement de changement de voie du véhicule, dans laquelle n est un entier positif supérieur ou égal à 2 ; ou
lorsqu'au moins w résultats de sortie parmi t résultats de sortie consécutifs du modèle de machine à vecteurs de support correspondent chacun à un second comportement de changement de voie cible, la détermination que le second comportement de changement de voie cible est le premier comportement de changement de voie du véhicule, dans laquelle w est un entier positif supérieur ou égal à 2, et t est un entier positif supérieur à w.

5. Méthode selon l'une quelconque des revendications 1 à 4, dans laquelle
le modèle de machine à vecteurs de support est déterminé en entraînant des signaux de posture du véhicule obtenus lorsque le véhicule a des comportements de changement de voie dans différents environnements de déplacement de véhicule et les comportements de changement de voie, et les différents environnements de conduite de véhicule comprennent au moins l'un de différents itinéraires de conduite de véhicule, de différentes densités de flux de trafic, de différents styles de conduite, ou de différentes vitesses de conduite de véhicule.

6. Méthode selon l'une quelconque des revendications 1 à 5, dans laquelle
le premier comportement de changement de voie du véhicule comprend au moins l'un des éléments suivants : aucun changement de voie, un changement vers la voie de gauche, un changement vers la voie de droite, un virage à gauche, un virage à droite, ou un demi-tour.

7. Appareil de reconnaissance d'un comportement de changement de voie d'un véhicule, comprenant :
une unité d'émission-réception (120), configurée pour obtenir au moins deux signaux de posture du véhicule d'un véhicule à partir d'au moins un capteur, dans lequel les au moins deux signaux de posture du véhicule comprennent un premier signal de posture du véhicule et un second signal de posture du véhicule, dans lequel
le premier signal de posture du véhicule est un signal obtenu à partir de l'au moins un capteur à un premier moment, et le second signal de posture du véhicule est un signal obtenu à partir de l'au moins un capteur à un second moment ; et
une unité de traitement (110), configurée pour supprimer un signal anormal dans les au moins deux signaux de posture du véhicule, après l'obtention des au moins deux signaux de posture du véhicule ; et
s'il y a plus de deux types de signaux de posture du véhicule restants après la suppression du signal anormal, et que les plus de deux types de signaux de posture du véhicule restants sont obtenus à des fréquences différentes, la réalisation d'un traitement d'interpolation sur les plus de deux types de signaux de posture du véhicule restants, où les plus de deux types de signaux de posture du véhicule restants obtenus après le traitement d'interpolation ont une même fréquence ; les plus de deux types de signaux de posture du véhicule restants qui ont la même fréquence obtenue après le traitement d'interpolation sont également normalisés, et les signaux de posture du véhicule normalisés sont entrés dans un modèle de machine à vecteur de support pour reconnaître un premier comportement de changement de voie du véhicule.

8. Appareil selon la revendication 7, dans lequel
le capteur comprend au moins l'un d'un capteur d'angle de braquage, d'un capteur de navigation inertielle, ou d'un capteur de vitesse de roue ; et
le signal de posture du véhicule comprend au moins l'un d'un angle de braquage, d'une vitesse de braquage, d'une vitesse de lacet, d'une accélération latérale, ou d'une vitesse du véhicule.

9. Appareil selon la revendication 7 ou 8, dans lequel
l'unité de traitement est spécifiquement configurée pour déterminer le premier comportement de changement de voie du véhicule sur la base d'un résultat de sortie du modèle de machine à vecteurs de support ; ou
l'unité de traitement est spécifiquement configurée pour déterminer le premier comportement de changement de voie du véhicule sur la base d'au moins deux résultats de sortie du modèle de machine à vecteurs de support.

10. Appareil selon la revendication 9, dans lequel
lorsque n résultats de sortie consécutifs du modèle de machine à vecteurs de support correspondent chacun à un premier comportement de changement de voie cible, l'unité de traitement est spécifiquement configurée pour déterminer que le premier comportement de changement de voie cible est le premier comportement de changement de voie du véhicule, dans lequel n est un entier positif supérieur ou égal à 2 ; ou
lorsqu'au moins w résultats de sortie parmi t résultats de sortie consécutifs du modèle de machine à vecteurs de support correspondent chacun à un second comportement de changement de voie cible, l'unité de traitement est spécifiquement configurée pour déterminer que le second comportement de changement de voie cible est le premier comportement de changement de voie du véhicule, dans lequel w est un entier positif supérieur ou égal à 2, et t est un entier positif supérieur à w.

11. Appareil selon l'une quelconque des revendications 7 à 10, dans lequel
le modèle de machine à vecteurs de support est déterminé en entraînant des signaux de posture du véhicule obtenus lorsque le véhicule a des comportements de changement de voie dans différents environnements de déplacement de véhicule et les comportements de changement de voie, et les différents environnements de conduite de véhicule comprennent au moins l'un de différents itinéraires de conduite de véhicule, de différentes densités de flux de trafic, de différents styles de conduite, ou de différentes vitesses de conduite de véhicule.

12. Support de stockage lisible, dans lequel le support de stockage lisible est configuré pour stocker des instructions, et lorsque les instructions sont exécutées, la méthode selon l'une quelconque des revendications 1 à 6 est mise en œuvre.
